Europäisches Patentamt

European Patent Office

Office européen des brevets

(19)

(11) EP 0 486 050 B1

(12) EUROPEAN PATENT SPECIFICATION

(45) Date of publication and mention
of the grant of the patent:
04.02.1998 Bulletin 1998/06

(51) Int Cl.⁶: **G01D 5/38**

(21) Application number: 91119533.7

(22) Date of filing: 15.11.1991

(54) **Method and apparatus for measuring displacement**

Verfahren und Vorrichtung zum Messen von Verschiebungen

Méthode et appareil pour mesurer un déplacement

(84) Designated Contracting States:
DE FR GB IT NL

(30) Priority: 16.11.1990 JP 310693/90
15.11.1991 JP 266230/91

(43) Date of publication of application:
20.05.1992 Bulletin 1992/21

(73) Proprietor: CANON KABUSHIKI KAISHA
Tokyo (JP)

(72) Inventor: Igaki, Masahiko,
c/o Canon Kabushiki Kaisha
Ohta-ku, Tokyo 146 (JP)

(74) Representative: Tiedtke, Harro, Dipl.-Ing.
Patentanwaltsbüro
Tiedtke-Bühling-Kinne & Partner
Bavariaring 4
80336 München (DE)

(56) References cited:
EP-A- 0 365 806          WO-A-89/05440
WO-A-89/05964          WO-A-90/13006
DE-A- 3 316 144          DE-A- 3 923 768
GB-A- 1 367 886          US-A- 3 245 307
US-A- 3 628 026          US-A- 3 628 870
US-A- 3 630 622          US-A- 3 768 911
US-A- 4 967 072

• PATENT ABSTRACTS OF JAPAN vol. 10, no. 389
(P-531)(2446) 26 December 1986 & JP-A-61 178
613 (Canon Inc.) 11 August 1986

## Description

## BACKGROUND OF THE INVENTION

Field of the Invention

The present invention relates to an apparatus and a method for measuring a displacement.

Related Background Art

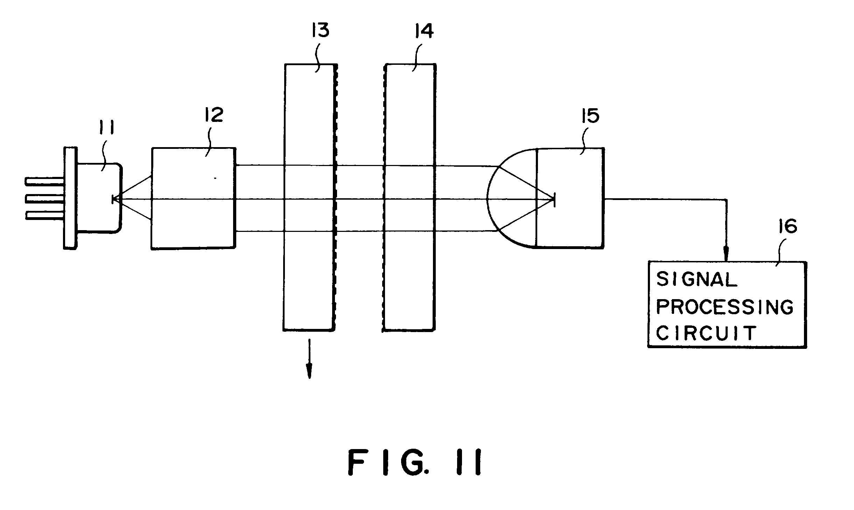

Encoders have been conventionally used to optically measure displacement amounts and displacement velocities of objects. Fig. 11 shows a typical arrangement of a conventional optical encoder. This encoder includes a light source 11 for generating a light beam, a lens 12 for collimating the light beam, a movable scale 13 having grating slits, and a stationary scale 14 having grating slits having the same pitch as that of the slits of the movable scale 13. Note that these grating slits have a pitch which does not substantially induce a diffraction effect. The encoder also includes a photodetector 15 for detecting amounts of light having passed through the movable and stationary scales 13 and 14, and a signal processing circuit 16. With this arrangement, when the movable scale 13 is travelled, a light amount detected by the photodetector 15 is periodically changed in correspondence to the travelling. More specifically, when the phases of the two slits coincide with each other, viewing them from the light source side, a maximum light amount is detected. Also, when the phases of the two slits of the scales 13 and 14 are shifted by 180°, a minimum light amount is detected. When the movable scale 13 is moved by one pitch of the slits, a period signal having one period is obtained. In the signal processing circuit 16, this period signal is converted into signal pulses, and these pulses are counted to measure a displacement of the movable scale.

In the conventional encoder of the type using these two scales, i.e., the movable and stationary scales, the positions of the two scales must be aligned with each other, and the position of each scale must be aligned with the detection system. In order to increase the detection resolution, high assembly precision is required to result in high cost. To increase the detection resolution is to decrease the pitch of the slits. However, when the pitch is excessively decreased, diffracted light components are produced to degrade displacement measurement. For this reason, the increase in detection resolution in this encoder is limited.

From document US-A-3,268,026 an apparatus and a method for measuring displacement is known using a first optical grating which is irradiated by light from a light source. An image of this first grating is formed via an image inversion system on the second grating. By doing so, a position of a second grating is optical conjugated with the position of the first grating image. By this optical conjugation the displacement is measured.

Document US-A-3,628,870 shows a device for measuring the magnitude of displacement which uses a moiré pattern. For measuring the amount of displacement this device uses an elongated grating while a radial grating is used in case of measuring an angular displacement. According to the description of this document, one grating should be stationary and the other grating should be movable.

From document US-A-3,768,911 an optical system for indicating extent and direction of incremental movement is known. This system uses a plurality of moiré fringe-generating grating pairs and operates in principle upon the fact that relative movement between the gratings in a direction transverse to the rulings results in a change in the direction of light output from the grating pair.

From document US-A-3,245,307 an apparatus as well as a method for measuring a displacement is known using a light source and an optical system. According to the disclosure of this document, a light source produces a light beam which is received by an optical system and directed on an optical grating. After passing said grating the light beam is detected by a detecting means. This system further comprises a mirror for reflecting the light beam so that the light beam is passing the grating two times in opposite directions, wherein the focal point of the light beam having passed the optical grating is lying on the reflecting surface of the mirror. The light beam coming from the light source is, according to this system, formed by a lens to be directed as a convergent light beam onto said optical grating. The preamble of the independent apparatus and method claim is drafted along this document.

The object underlying the invention is to create an apparatus and a method for measuring a displacement of an object at high resolution. Furthermore, a drive system for driving the apparatus shall be created.

This object is achieved by the features of claims 1 and 8 and, regarding the drive system, of claim 13. According to the invention, the optical grating is located before the focal point of the light beam directed to said grating such that the light beam passing said grating is focused behind said grating. After passing again an optical grating, said light beam is detected by a detecting means.

To achieve this, a single grating may be used which is passed by the light beam two times, or two optical gratings may be used which are passed by the light beam so that there is no need for passing an optical grating again. By these features an apparatus can be realized showing a very high resolution and having a simple construction, which ensures that the adjustment of the different elements can be easily maintained, so that even over a longer period of use a high accuracy can be maintained.

BRIEF DESCRIPTION OF THE DRAWINGS

Fig. 1 is a view showing an arrangement according to the first embodiment of the present invention;
Fig. 2 is a perspective view of the first embodiment;
Figs. 3 and 4 are views for explaining a phenomenon for forming interference fringes;
Fig. 5 is a view showing an arrangement according to the second embodiment of the present invention;
Fig. 6 is a view showing an arrangement according to the third embodiment of the present invention;
Fig. 7 is a view showing an arrangement according to the fourth embodiment of the present invention;
Fig. 8 is a view showing an arrangement according to the fifth embodiment of the present invention;
Fig. 9 is a view showing an arrangement obtained when the present invention is applied to a rotary encoder;
Fig. 10 is a view showing an arrangement of a driving system having an encoder; and
Fig. 11 is a view showing a conventional arrangement.

DESCRIPTION OF THE PREFERRED EMBODIMENTS

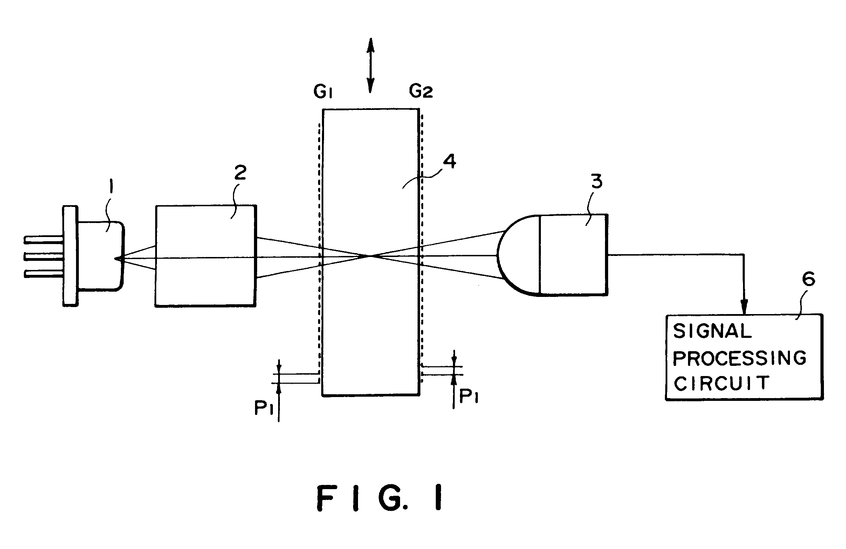

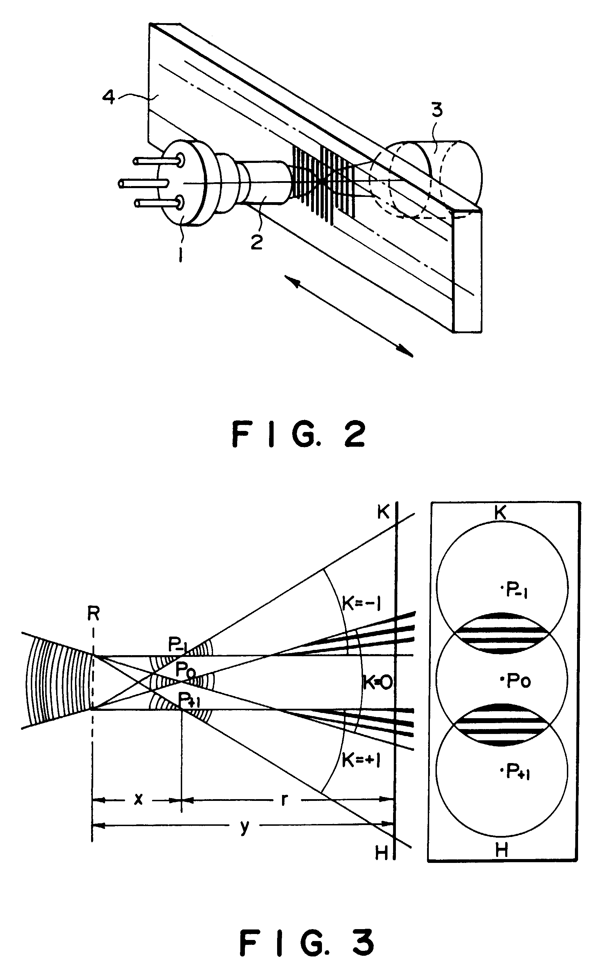

Preferred embodiments will be described in detail with reference to the accompanying drawings when the present invention is applied to encoders. Fig. 1 is a sectional view showing an arrangement of an optical system according to the first embodiment of the present invention. Fig. 2 is a perspective view showing an arrangement of the first embodiment. Referring to Figs. 1 and 2, an encoder of this embodiment includes a semiconductor laser as a light source 1 for generating a coherent beam having a wavelength $\lambda$, and a lens system 2 for converting the beam from the semiconductor laser 1 acting as light source into a convergent beam. The semiconductor laser 1 and the lens system 2 constitute a beam radiation means. Any coherent light source (such as LED) can be used in place of the semiconductor laser. An optical element in form of a linear scale 4 comprises transparent flat plates parallel to each other. A first optical grating G1 having a pitch P1 having a diffraction grating function is formed on one surface of the scale 4 on the side facing the beam radiation means. A second optical grating G2 having the same pitch P1 having a diffraction grating function is formed on the other surface of the scale 4. A photodetector 3 serving as a detecting means is located at an opposite position to the beam radiation means, the scale 4 being disposed there between. An output from the photodetector as detecting means 3 is connected to a signal processing circuit 6 including a pulser, a counter, and the like to measure displacement information such as a displacement amount and a displacement velocity of the scale 4.

An operation of the optical system in the displacement measuring apparatus having the above arrangement will be described below. A beam from the semiconductor laser 1 is converged into a convergent beam by the lens system 2. This convergent beam is incident on the first grating G1 of the scale 4. The beam having passed through the first grating G1 is focused at a central position between the two grating surfaces formed in the scale 4. The convergent beam is then changed into a divergent beam from this central position. The divergent beam is incident on the second grating G2. A beam having passed through the second region, i.e., the second grating, is incident on the photodetector 3 serving as a light-receiving unit.

The principle of measurement according to the present invention will be described below. A phenomenon for forming an interference image by a convergent beam, which phenomenon is the assumption of the present invention, will be described below. Formation of an interference image by this convergent beam is known in a so-called Ronchi interferometer or the like. This phenomenon is described in, e.g., APPLIED OPTICS (April 1964/vol. 3, no. 4) in detail, and will be briefly described below.

When a convergent beam obtained from an optical means such as a lens is incident on a diffraction grating, the beam is split into a large number of diffracted light components, as shown in Fig. 3. In particular, when +1st-, -1st-, and 0th-order diffracted light components are taken as an example, these components are focused at points $P_0$, $P_{+1}$, and $P_{-1}$. The respective components changed to divergent components again are interfered and overlap each other to form interference fringes. As shown in Fig. 3, these interference fringes become evenly spaced linear grating images parallel to the grating intervals of the diffraction grating when a wave surface of incident light beam on the grating is a spherical wave. A grating pitch A of the grating images is given as follows:

$$A = a\,(r/x)$$

where $\underline{a}$ is the grating pitch value of the irradiated diffraction grating.

The Ronchi interferometer has been developed to test mainly lenses. The present invention is characterized in that this principle is further developed and is applied to displacement measurement. The characteristic features of the present invention reside in that a diffraction grating is irradiated with a convergent beam, and when the grating is displaced in a direction, diffracted images as a result of overlapping of diffracted light components once focused are shifted in a direction opposite to the moving direction of the grating by phase shifts of the respective diffracted light components. That is, the phenomenon in which the diffracted image is inverted is utilized in the present invention.

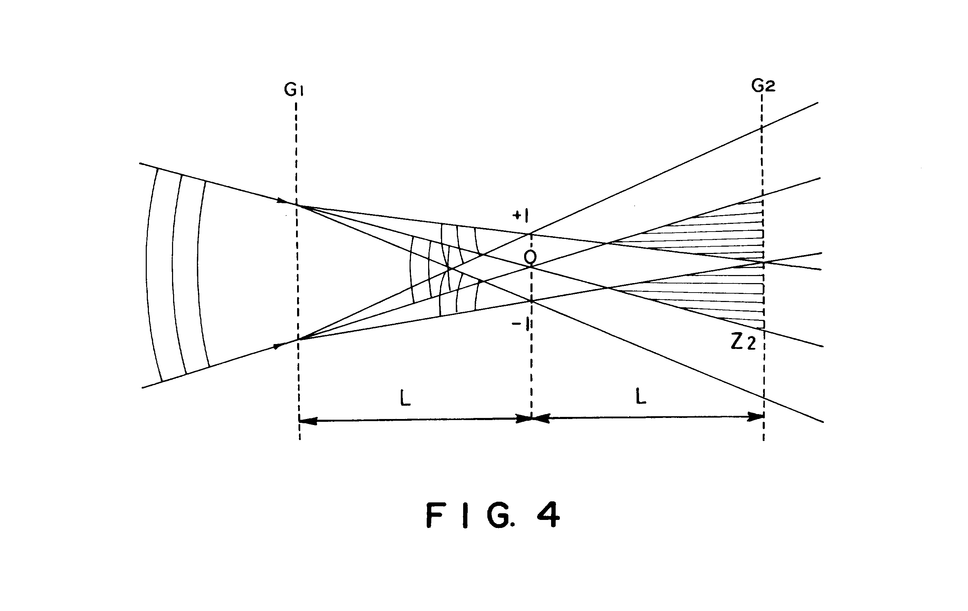

The behaviors of diffracted light components obtained upon incidence of a convergent beam on the grating G1 of the scale 4 will be described with reference to Fig. 4 illustrating the principle of measurement of the present invention. The beam incident on the grating G1 is split and passes through the grating GI as a large number of diffracted light components. Interference images (e.g., a diffracted interference image by two or three light components) are formed in regions (latched portions) where +1st-. -1st-, and 0th-order diffracted components each having high energy level overlap each other. In particular, when a focal point of the convergent beam is located at a position away from the grating G1 by a distance L, an image-inverted diffracted grating image Z1 having the same pitch as that of the grating G1 is formed at a position away from the grating G1 by a distance 2L. For example, when the grating G1 is moved upward in Fig. 4, the image Z1 is moved downward. The diffracted grating image Z1 is formed on the second grating G2. Since the grating G2 is moved upward, the grating image Z1 and the grating G2 are moved in opposite directions. At this time, a relative displacement becomes substantially doubled. The interference fringe pattern as a so-called moire pattern formed by overlapping of the grating image Z1 and the second grating is shifted by one pitch of the moiré pattern upon P/2 displacement with respect to a displacement P1 of the scale 4. As a result, the amount of light incident on the photodetector 3 is changed in accordance with moving of the grating unit, thereby obtaining an almost sinusoidal output signal. This signal is processed by the signal processing circuit 6, thereby detecting displacement information.

According to the present invention, the conventional stationary grating can be omitted to reduce the number of constituting parts. The position detection resolution can be represented by the sinusoidal output representing a pitch twice the optical grating pitch. In addition, the diffracted image is two-dimensionally inverted. Accordingly, even if an error occurs in the azimuth angle of the scale, this error does not adversely affect the measurement precision, thereby obtaining a stale signal having a high contrast level.

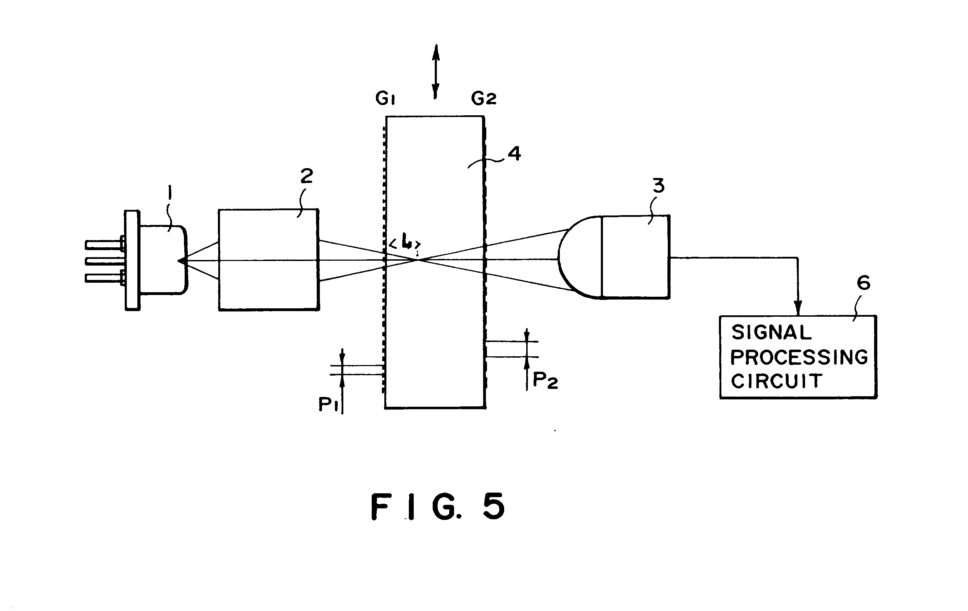

Fig. 5 is a view for explaining the second embodiment of the present invention. The overall optical layout of this embodiment is the same as that of the first embodiment, and a detailed description thereof will be omitted. Unlike in the first embodiment, a grating pitch of an optical grating G1 formed on a scale 4 is P1, a grating pitch of a second optical grating G2 is P2, and a focal position of the convergent beam is different from that in the first embodiment. The focal position of the convergent beam is spaced away from the first grating G1 by a distance L, whereby the same effect as in the first embodiment can be obtained in the second embodiment.

The distance L is defined as follows:

$$L = T \times P1 /(P1 + P2)$$

A diffracted grating image formed on the second grating G2 is displaced by the same magnification as (P2/P1) times upon displacement of the scale 4. The grating pitch of the overlapping optical gratings is P2 and the gratings are moved together with the scale 4. Therefore, a relative displacement amount is (1+P2/P1) times with respect to a displacement of the scale 4. As a result, the number of output pulses per unit displacement is (1+P1/P2)/P2.

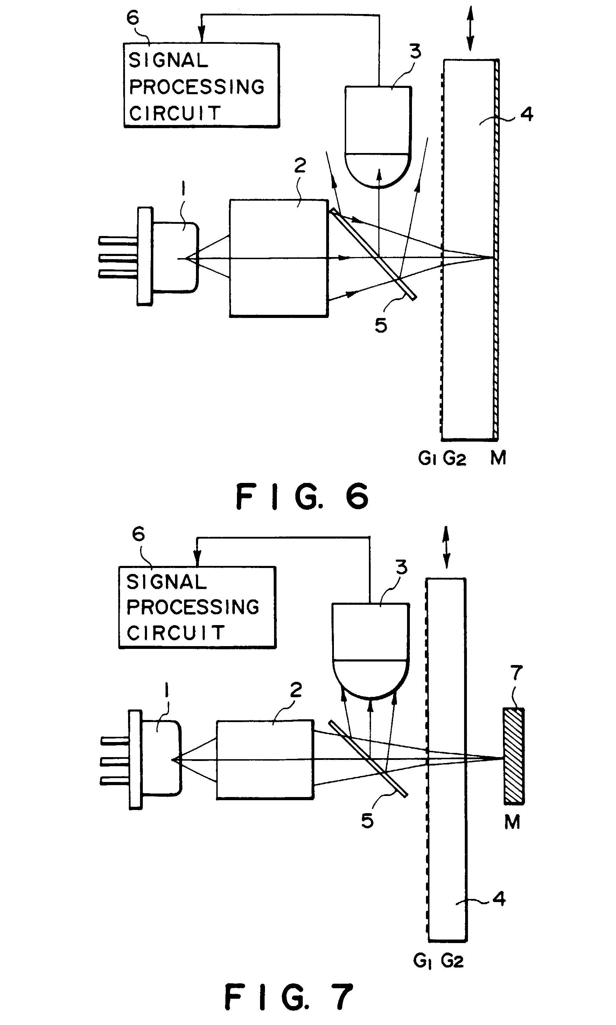

Fig. 6 is a sectional view of an optical system for explaining the third embodiment according to the present invention. The same reference numerals as in the previous embodiments denote the same parts in the third embodiment. The characteristic feature of the third embodiment resides in that first and second gratings are constituted by a single grating, thereby reducing the number of gratings. As shown in Fig. 6, the same optical grating as in the above embodiments is formed on one surface of a scale 4 on the side facing the light radiation means. A light-reflecting mirror surface M is formed on the other surface of the scale 4, and an optical layout is determined so that a focal plane of the convergent beam serves as the light-reflecting surface M. A half mirror 5 is formed between a lens system 2 and the optical scale 4 to guide a beam reflected by the light-reflecting surface of the scale 4 to a photodetecor 3.

The arrangement of this embodiment is equivalent to that obtained when a light-reflecting surface is located on a focal plane of a beam in the first embodiment. A beam is focused on the light-reflecting surface M to two-dimensionally invert the diffracted grating image to reflect thereon, whereby the inverted image is formed on the single grating again. At this time, since the direction of moving of the grating is opposite to that of the diffracted grating image, a relative displacement amount is substantially doubled, thereby obtaining a double pulse signal as in the previous embodiments. In the third embodiment, the grating is formed on only one surface of the optical scale, and the other surface can be constituted by the light-reflecting surface. Therefore, the scale can be easily manufactured to further reduce the fabrication cost.

Fig. 7 is a sectional view of an optical system for explaining the fourth embodiment of the present invention. The same reference numerals as in the previous embodiments denote the same parts in the fourth embodiment. This embodiment is a modification of the embodiment shown in Fig. 6. First and second gratings G1 and G2 are constituted by a single grating, wherein a convergent beam is incident on the single grating as in the embodiment of Fig. 6. In this embodiment a diffraction grating is formed on scale 4 on the light source side, and a reflecting element in form of a mirror 7 is disposed at an opposite side to the light source 1 with respect to the scale 4. The reflecting surface of the mirror 7 coincides with the focal plane of a convergent beam.

With this arrangement, a displacement measurement function is the same as that in the embodiment of Fig. 6. In the arrangement of the fourth embodiment, even if the grating of the scale 4 is axially shifted, the focal position is not changed. Therefore, an allowance of mounting precision of the scale 4 and the flatness of the scale 4 itself can be advantageously increased.

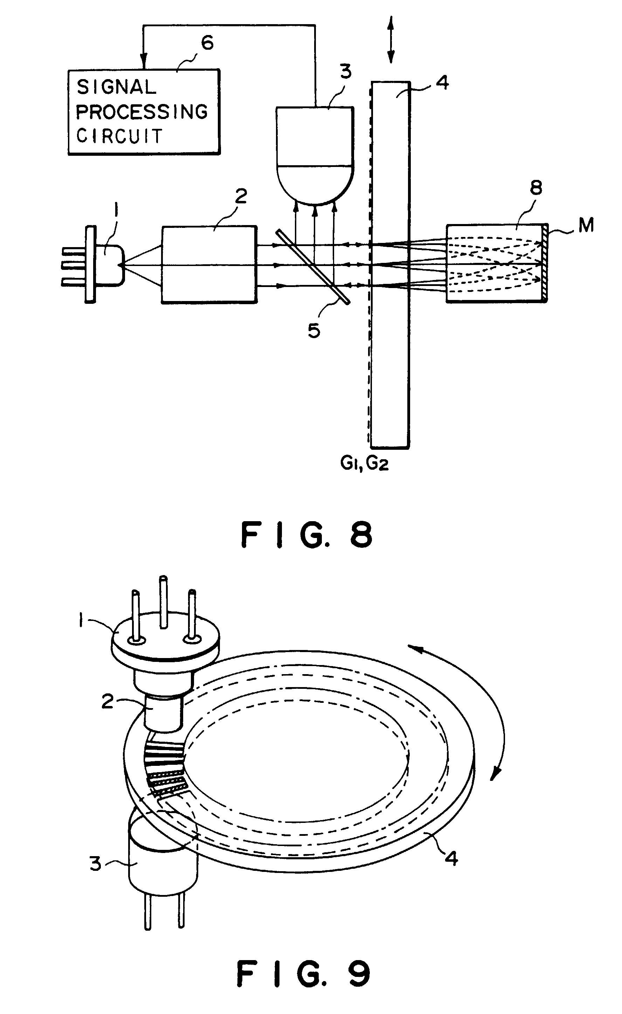

Fig. 8 is a sectional view of an optical system to explain the fifth embodiment of the present invention. The same reference numerals as in the previous embodiments denote the same parts. In this embodiment, an optical element 8 constituting a cat's-eye reflection system in which a lens portion and a reflection portion are integrally formed is arranged independently of the scale 4. A beam from a light source 1 is collimated into a collimated beam by the lens system 2. A beam having passed through a half mirror 5 and the scale 4 is reflected by the optical system 8. The diffracted image on the grating of the scale 4 is two-dimensionally inverted due to effect of the cat's-eye reflection system. As in all the embodiments described above, even if an error occurs in the azimuth angle of the scale, it does not adversely affect the measurement precision, thereby obtaining a stable signal having a high contrast level. The same effect as in the embodiment of Fig. 7, i.e., the arrangement free from an axial change of the scale, can be obtained. Since the collimated beam is incident on the grating, an interference range of the diffracted light components having passed through the grating can be increased wide, thereby obtaining a signal having a higher contrast level, which characteristic feature is unique to this embodiment. Although the collimated beam is used in the preferred embodiment of Fig. 8, a convergent beam may be incident on the scale, thereby serving us a displacement measurement apparatus.

Fig. 9 is a perspective view of an arrangement in which the present invention is applied to a rotary encoder in place of the linear encoders of the above embodiments. In the embodiment of Fig. 9, a rotary scale is used in place of the linear scale, and first and second optical gratings are formed at the same radial concentric positions on the upper and lower surfaces of the scale. With this arrangement, rotation information of the rotary scale can be obtained by the same signal processing as that of the linear encoder. Displacement detection can be performed in the same arrangements as in Figs. 6, 7, and 8.

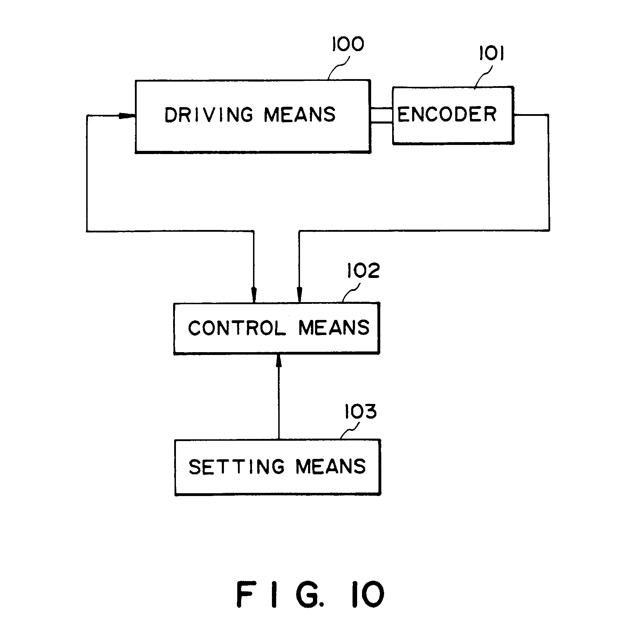

Fig. 10 shows a configuration of a driving system having the linear or rotary encoder. A scale of the encoder is connected to a displacement portion of a driving mechanism 100 having a driving source, such as a motor, an actuator, an internal combustion engine, to detect a displacement state such as a displacement amount or a displacement velocity. A detection output from an encoder 101 is fed back to a control means 102. The control means 102 transmits a driving signal to the driving mechanism 100 so that the driving mechanism 100 is set in a state set by a setting means 103. By this feedback system, a drive state set by the setting means 103 can be obtained. This driving system can be used in a variety of applications for various types of machine tools, manufacturing machines, measuring equipment, robots, cameras, video/audio equipment, information equipment, and apparatuses having driving mechanisms.

**Claims**

1. An apparatus for measuring a displacement, comprising a light source (1) producing a light beam and an optical system (2) receiving said light beam and directing said light beam on an optical grating (G1) and a detecting means (3) detecting said light beam, **characterized in that** said optical grating (G1) is located before the focal point of said light beam such that said light beam passing said grating (Gl) is focused behind said grating (G1), wherein said light beam is detected by said detecting means (3) after passing again an optical grating.

2. An apparatus according to claim 1, characterized in that said light beam is focused behind said grating (Gl) on a reflecting surface of a reflecting element (7), which reflects said light beam to pass said grating (G1) again but in the opposite direction, wherein after having passed said grating (G1) again the light beam is received via an optical means (5) by a detecting means (3).

3. An apparatus according to claim 1, characterized in that said optical grating (G1) is formed on an optical element (4) and that said light beam is focused behind said grating (G1) within said optical element (4), wherein said optical element (4) comprises a second optical grating (G2) located behind said focal point, wherein said light beam is received by said detecting means (3) after having passed said second optical grating (G2).

4. An apparatus according to claim 2, characterized in that said optical element (4) is a scale having a transparent parallel portion, and in that said element (7) having a light reflecting surface (M) is arranged independently of said scale.

5. An apparatus according to one of the preceding claims, characterized in that said light source (1) includes a semiconductor laser source.

6. An apparatus according to one of the preceding claims, characterized in that said optical grating (G1) is formed on the surface of a linear scale.

7. An apparatus according to one of claims 1 to 6, characterized in that said optical grating (G1) is formed on the surface of a rotary scale.

8. A method of measuring a displacement comprising the steps of producing a light beam by means of a light source (1) directing said light beam via an optical system (2) on an optical grating (G1), detecting said light beam by a detecting means (3) characterized by locating said optical grating (G1) before the focal point of said light beam such that said light beam passing said grating (G1) is focused behind said grating (G1) and detecting said light beam by said detecting means (3) after passing again an optical grating.

9. A method of measuring a displacement according to claim 7, characterized by focusing said light beam behind said grating (G1) on the reflecting surface of a reflecting element (7), reflecting said light beam to pass said grating (G1) again, but in the opposite direction and detecting said light beam after having passed said grating (G1) again by a detecting means (3) via an optical means (5).

10. A method of measuring a displacement according to claim 8, characterized by forming said optical grating (G1) and a second optical grating (G2) on an optical element (4), focusing said light beam behind said grating (G1) within said optical element (4) but before that second optical grating and receiving said light beam by said detecting means (3) after having passed said second optical grating (G2).

11. A method according to claim 10, characterized in that said optical element (4) is a scale, wherein that grating (G1) is formed on a beam incidence surface of said scale (4) having a transparent parallel portion, wherein on the other surface of said scale a reflecting element (7) having said light reflecting surface (M) is formed.

12. A method according to claim 10, characterized in that said optical element (4) is a scale, wherein said optical grating (G1) is formed on the beam incidence surface of said scale having said transparent parallel portion, wherein said reflecting element (7) having a light reflecting surface (M) is arranged independently of said scale (4).

13. A driving system having a displacement apparatus, comprising:

a driving mechanism (100), and an apparatus according to one of claims 1 to 6 for measuring a drive state of said driving mechanism (100), and a scale (4) mounted on a displacement portion of said driving mechanism (100), wherein said optical grating (G1) of the displacement measuring apparatus being formed on said scale (4) and said means (3) for detecting the beam having passed via said optical grating (G1) being included in means for measuring the drive state by obtaining a relative displacement information between said optical system (2) and said scale (4).

**Patentansprüche**

1. Vorrichtung zum Messen einer Verschiebung mit einer einen Lichtstrahl erzeugenden Lichtquelle (1) und einem optischen System (2), das den Lichtstrahl empfängt und den Lichtstrahl auf ein optisches Gitter (G1) und eine den Lichtstrahl erfassende Erfassungseinrichtung (3) lenkt,
**dadurch gekennzeichnet, daß**
das optische Gitter (G1) derart vor dem Brennpunkt des Lichtstrahls angeordnet ist, daß der durch das Gitter (G1) hindurchtretende Lichtstrahl hinter dem Gitter (G1) fokussiert wird, wobei der Lichtstrahl, nachdem er ein weiteres Mal durch ein optisches Gitter hindurchgetreten ist, von der Erfassungseinrichtung (3) erfaßt wird.

2. Vorrichtung nach Anspruch 1,
**dadurch gekennzeichnet, daß**
der Lichtstrahl hinter dem Gitter (G1) auf einer reflektierenden Oberfläche eines Reflexionselementes (7) fokussiert wird, das den Lichtstrahl reflektiert, so daß er ein weiteres Mal durch das Gitter (G1), jedoch in der Gegenrichtung hindurchtritt, wobei der Lichtstrahl, nachdem er ein weiteres Mal durch das Gitter (G1) hindurchgetreten ist, über eine optische Einrichtung (5) von einer Erfassungseinrichtung (3) empfangen wird.

3. Vorrichtung nach Anspruch 1,
**dadurch gekennzeichnet, daß**
das optische Gitter (G1) auf einem optischen Element (4) ausgebildet ist und der Lichtstrahl hinter dem Gitter (G1) innerhalb des optischen Elementes (4) fokussiert wird, wobei das optische Element (4) ein hinter dem Brennpunkt angeordnetes zweites optisches Gitter (G2) umfaßt und der Lichtstrahl von der Erfassungseinrichtung (3) empfangen wird, nachdem er durch das zweite optische Gitter hindurchgetreten ist.

4. Vorrichtung nach Anspruch 2,
**dadurch gekennzeichnet, daß**
das optische Element (4) eine Skala mit einem transparenten Parallelabschnitt ist und das Element (7) mit einer Licht reflektierenden Oberfläche (M) unabhängig von der Skala angeordnet ist.

5. Vorrichtung nach einem der vorstehenden Ansprüche,

**dadurch gekennzeichnet, daß**
die Lichtquelle (1) eine Halbleiterlaserquelle beinhaltet.

6. Vorrichtung nach einem der vorstehenden Ansprüche,
**dadurch gekennzeichnet, daß**
das optische Gitter (G1) auf der Oberfläche einer Linearskala ausgebildet ist.

7. Vorrichtung nach einem der Ansprüche 1 bis 6,
**dadurch gekennzeichnet, daß**
das optische Gitter (G1) auf der Oberfläche einer Drehskala ausgebildet ist.

8. Verfahren zum Messen einer Verschiebung, bestehend aus den Schritten des Erzeugens eines Lichtstrahls mittels einer Lichtquelle (1), die den Lichtstrahl über ein optisches System (2) auf ein optisches Gitter (G1) lenkt, sowie des Erfassens des Lichtstrahls durch eine Erfassungseinrichtung (3),
**gekennzeichnet durch**
derartiges Anordnen des optischen Gitters (G1) vor dem Brennpunkt des Lichtstrahls, daß der durch das Gitter (G1) hindurchtretende Lichtstrahl hinter dem Gitter (G1) fokussiert wird, und Erfassen des Lichtstrahls, nachdem er ein weiteres Mal durch ein optisches Gitter hindurchgetreten ist, durch die Erfassungseinrichtung (3).

9. Verfahren zum Messen einer Verschiebung nach Anspruch 8,
**gekennzeichnet durch**
Fokussieren des Lichtstrahls hinter dem Gitter (G1) auf der reflektierenden Oberfläche eines Reflexionselementes (7), Reflektieren des Lichtstrahls, so daß er ein weiteres Mal durch das Gitter (G1), jedoch in der Gegenrichtung hindurchtritt, und Erfassen des Lichtstrahls, nachdem er ein weiteres Mal durch das Gitter (G1) hindurchgetreten ist, über eine optische Einrichtung (5) durch eine Erfassungseinrichtung (3).

10. Verfahren zum Messen einer Verschiebung nach Anspruch 8,
**gekennzeichnet durch**
Ausbilden des optischen Gitters (G1) und eines zweiten optischen Gitters (G2) auf einem optischen Element (4), Fokussieren des Lichtstrahls hinter dem Gitter (G1) innerhalb des optischen Elements (4), aber vor jenem zweiten optischen Gitter und Empfangen des Lichtstrahls durch die Erfassungseinrichtung (3), nachdem er durch das zweite optische Gitter (G2) hindurchgetreten ist.

11. Verfahren nach Anspruch 10,
**dadurch gekennzeichnet, daß**
das optische Element (4) eine Skala ist, wobei jenes Gitter (G1) auf einer Strahleinfall-Oberfläche der Skala (4) ausgebildet ist, die einen transparenten Parallelabschnitt aufweist, wobei auf der anderen Oberfläche der Skala ein Reflexionselement (7) mit der Licht reflektierenden Oberfläche (M) ausgebildet ist.

12. Verfahren nach Anspruch 10,
**dadurch gekennzeichnet, daß**
das optische Element (4) eine Skala ist, wobei das optische Gitter (G1) auf der Strahleinfall-Oberfläche der Skala mit dem transparenten Parallelabschnitt ausgebildet ist, und wobei das Reflexionselement (7) mit einer Licht reflektierenden Oberfläche (M) unabhängig von der Skala (4) angeordnet ist.

13. Antriebssystem mit einer Verschiebungsvorrichtung mit:

einem Antriebsmechanismus (100),
einer Vorrichtung nach einem der Ansprüche 1 bis 6 zum Messen eines Antriebszustandes des Antriebsmechanismus (100) und
einer an einem Verschiebungsabschnitt des Antriebsmechanismus (100) befestigten Skala (4), wobei das optische Gitter (G1) der Verschiebungs-Meßvorrichtung auf der Skala (4) ausgebildet ist und die Einrichtung (3) zum Erfassen des durch das optische Gitter (G1) hindurchgetretenen Strahls in einer Einrichtung zum Messen des Antriebszustandes enthalten ist, wobei dieser durch Erlangen einer Information bezüglich einer relativen Verschiebung zwischen dem optischen System (2) und der Skala (4) gemessen wird.

**Revendications**

1. Appareil pour mesurer un déplacement, comprenant une source (1) lumineuse produisant un faisceau lumineux et un système (2) optique recevant ledit faisceau lumineux et dirigeant ledit faisceau lumineux sur un réseau (G1) de diffraction optique et un moyen (3) de détection détectant le faisceau lumineux, caractérisé en ce que ledit réseau (G1) de diffraction optique est situé avant le foyer dudit faisceau lumineux de telle façon que ledit faisceau lumineux passant à travers ledit réseau (G1) de diffraction soit focalisé à l'arrière dudit réseau (G1) de diffraction, ledit faisceau lumineux étant détecté par ledit moyen (3) de détection après être passé de nouveau à travers un réseau de diffraction optique.

2. Appareil selon la revendication 1, caractérisé en ce que ledit faisceau lumineux est focalisé à l'arrière du réseau (G1) de diffraction sur une surface réfléchissante d'un élément (7) réfléchissant qui réfléchit ledit faisceau lumineux pour qu'il passe de nouveau à travers ledit réseau (G1) de diffraction mais en sens opposé, dans lequel, après qu'il soit de nouveau passé à travers ledit réseau (G1) de diffraction, le faisceau lumineux est reçu par l'intermédiaire d'un moyen (5) optique par un moyen (3) de détection.

3. Appareil selon la revendication 1,
caractérisé en ce que ledit faisceau (G1) de diffraction optique est formé sur un élément (4) optique et en ce que ledit faisceau lumineux est focalisé à l'arrière dudit réseau (G1) de diffraction à l'intérieur dudit élément (4) optique, ledit élément (4) optique comprenant un second réseau (G2) de diffraction optique situé à l'arrière dudit foyer, ledit faisceau lumineux étant reçu par ledit moyen (3) de détection après qu'il soit passé à travers ledit second réseau (G2) de diffraction optique.

4. Appareil selon la revendication 2,
caractérisé en ce que ledit élément (4) optique est une échelle ayant une partie parallèle transparente, et en ce que ledit élément (7) ayant une surface (M) réfléchissant la lumière est agencé indépendamment de ladite échelle.

5. Appareil selon l'une quelconque des revendications précédentes, caractérisé en ce que ladite source (1) lumineuse comporte une source à laser semiconducteur.

6. Appareil selon l'une quelconque des revendications précédentes, caractérisé en ce que ledit réseau (G1) de diffraction optique est formé sur la surface d'une échelle linéaire.

7. Appareil selon l'une quelconque des revendications 1 à 6, caractérisé en ce que ledit réseau (G1) de diffraction optique est formé sur la surface d'une échelle rotative.

8. Procédé de mesure d'un déplacement,
comprenant les étapes consistant à produire un faisceau lumineux au moyen d'une source (1) lumineuse dirigeant ledit faisceau lumineux par l'intermédiaire d'un système (2) optique sur un réseau (G1) de diffraction optique, à détecter ledit faisceau lumineux à l'aide d'un moyen (3) de détection, caractérisé par le positionnement dudit réseau (G1) de diffraction optique avant le foyer dudit faisceau lumineux de telle façon que ledit faisceau lumineux passant à travers ledit réseau (G1) de diffraction soit focalisé à l'arrière dudit réseau (G1) de diffraction, et par la détection dudit faisceau lumineux par ledit moyen (3) de détection après qu'il soit passé de nouveau à travers un réseau de diffraction optique.

9. Procédé de mesure d'un déplacement selon la revendication 7, caractérisé par la focalisation dudit faisceau lumineux à l'arrière dudit réseau (G1) de diffraction sur la surface réfléchissante d'un élément (7) réfléchissant, la réflexion dudit faisceau lumineux pour qu'il passe de nouveau à travers ledit réseau (G1) de diffraction, mais en sens opposé, et la détection dudit faisceau lumineux après qu'il soit de nouveau passé à travers ledit réseau (G1) de diffraction, par un moyen (3) de détection, par l'intermédiaire d'un moyen (5) optique.

10. Procédé de mesure d'un déplacement selon la revendication 8, caractérisé par la formation dudit réseau (G1) de diffraction optique et d'un second réseau (G2) de diffraction optique sur un élément (4) optique, la focalisation dudit faisceau lumineux à l'arrière dudit réseau (G1) de diffraction à l'intérieur dudit élément (4) optique, mais avant ce second réseau de diffraction optique, et la réception dudit faisceau lumineux par ledit moyen (3) de détection, après qu'il soit passé à travers ledit second réseau (G2) de diffraction optique.

11. Procédé selon la revendication 10,
caractérisé en ce que ledit élément (4) optique est une échelle, dans lequel le réseau (G1) de diffraction est formé sur une surface d'incidence de faisceau de ladite échelle (4) ayant une partie parallèle transparente, et dans lequel, sur l'autre surface de ladite échelle, est formé un élément (7) réfléchissant ayant ladite surface (M) réfléchissant la lumière.

12. Procédé selon la revendication 10,
caractérisé en ce que ledit élément (4) optique est une échelle, dans lequel ledit réseau (G1) de diffraction optique est formé sur la surface d'incidence de faisceau de ladite échelle ayant ladite partie parallèle transparente, et dans lequel ledit élément (7) réfléchissant ayant une surface (M) réfléchissant la lumière est agencé indépendamment de ladite échelle (4).

13. Système d'entraînement ayant un appareil de déplacement comprenant :

un mécanisme (100) d'entraînement, et un appareil selon l'une des revendications 1 à 6 pour mesurer un état d'entraînement dudit mécanisme (100) d'entraînement, et une échelle (4) montée sur une partie de déplacement dudit mécanisme (100) d'entraînement, dans lequel ledit réseau (G1) de diffraction optique de l'appareil de mesure de dépla-

**EP 0 486 050 B1**

cement est formé sur ladite échelle (4) et ledit moyen (3) destiné à détecter le faisceau qui est passé à travers ledit réseau (G1) de diffraction optique est contenu dans des moyens pour mesurer l'état d'entraînement en obtenant une information de déplacement relative entre ledit système (2) optique et ladite échelle (4).

F I G. I

EP 0 486 050 B1

F I G. 2

F I G. 3

F I G. 4

SIGNAL
PROCESSING
CIRCUIT

6

3

G2

4

G1

P2

P1

2

FIG. 5

**FIG. 6**

**FIG. 7**

SIGNAL
PROCESSING
CIRCUIT

$G_1, G_2$

# F I G. 8

# F I G. 9

F I G. 10

FIG. II

SIGNAL PROCESSING CIRCUIT

16

15

14

13

12

11